# EUROPÄISCHE PATENTSCHRIFT

(11) **EP 1 618 362 B1**
(45) Veröffentlichungstag und Bekanntmachung des Hinweises auf die Patenterteilung: **07.12.2011**
(21) Anmeldenummer: 04730231.0
(22) Anmeldetag: 29.04.2004
(51) Int. Cl.: G01L 19/04

(54) **DRUCKAUFNEHMER MIT TEMPERATURKOMPENSATION**
TEMPERATURE-COMPENSATED PRESSURE GAUGE
CAPTEUR DE PRESSION A COMPENSATION DE TEMPERATURE

(30) Priorität: 29.04.2003 DE 10319417
(43) Veröffentlichungstag der Anmeldung: 25.01.2006
(73) Patentinhaber: Endress + Hauser GmbH + Co. KG, 79689 Maulburg (DE)
(72) Erfinder: MUTH, Stefan, 79650 Schopfheim (DE); BECHER, Raimund, 79238 Ehrenkirchen (DE)
(74) Vertreter: Andres, Angelika Maria
(86) Internationale Anmeldenummer: PCT/EP2004/004576
(87) Internationale Veröffentlichungsnummer: WO 2004/097361

(56) Entgegenhaltungen:
- EP-A- 0 919 796
- WO-A-96/27124
- WO-A-03/034015
- US-B1- 6 267 010

## Beschreibung

Die vorliegende Erfindung betrifft einen Druckaufnehmer mit Temperaturkompensation. Solche Druckaufnehmer werden beispielsweise in Bereichen eingesetzt, bei denen große Temperaturschwankungen zu erwarten sind, oder die Temperatur stark von der üblichen Umgebungstemperatur nach oben oder unten abweicht.

in diesen Fällen wird der eigentliche Sensorkörper oft von dem Meßmedium, dessen Druck zu erfassen ist, räumlich abgesetzt, um den Temperatureinfluß auf die Meßzelle bzw. die Sensorelektronik zu minimieren. Der Druck wird bei solchen Druckaufhehmern dann gewöhnlich mittels eines Druckmittlers erfaßt und über ein Kapillarrohr hydraulisch zu dem Sensorkörper übertragen. Insoweit als die hydraulische Übertragung des Drucks vom Druckmittler zur Meßzelle temperaturabhängig ist, weisen einige Druckmittler nach dem Stand der Technik einen Temperatursensor auf, um die Temperatur des Druckmittlers zu erfassen, und bei der Auswertung der von der Meßzelle erfaßten Drucksignale zu berücksichtigen.

Die Veröffentlichung WO 9627124 A1 offenbart einen Druckmessumformer mit weit abgesetzten hydraulischen Druckmittlern, insbesondere zur Füllstandsmessung, wobei entlang der Kapillarleitungen zwischen den Druckmittlern und dem Messumformer, elektrische Leiter mit einem temperaturabhängigen Widerstandswert verlegt sind, um damit den integrierten Temperaturverlauf entlang der Kapillarleitungen zu erfassen und auf dieser Basis eine Kompensation der Dichteschwankungen der hydraulischen Übertragungsflüssigkeit durchzuführen.

Der vorliegenden Erfindung liegt die Aufgabe zugrunde einen verbesserten Druckaufnehmer mit Temperaturkompensation bereitzustellen.

Die Aufgabe wird gelöst durch den Druckaufnehmer gemäß des unabhängigen Patentanspruchs 1.

Der erfindungsgemäße Druckaufnehmer zum Erfassen des Drucks eines Mediums umfaßt ein Druckmittlermodul mit einem Druckmittlerkörper und einer Trennmembran, die unter Bildung einer Druckkammer zwischen dem medienseitigen Druckmittlerkörper und der Trennmembran an dem Druckmittlerkörper befestigt ist; einen Temperatursensor zum Erfassen einer Temperatur des Druckmitttlermoduls; ein Sensormodul mit einer Druckmeßzelle; eine Druckleitung, die sich zwischen der Druckkammer und der Meßzelle erstreckt, um die Meßzelle mittels einer Übertragungsflüssigkeit mit dem in der Druckkammer vorherrschenden Druck zu beaufschlagen; ein Gehäuse, welches von dem Druckmittlermodul beabstandet ist und eine Kammer aufweist, in der eine elektronische Schaltung angeordnet ist, welche einen ersten Eingang für Signale der Druckmeßzelle und einen zweiten Eingang für Signale des Temperatursensors aufweist; dadurch gekennzeichnet, daß der Druckaufnehmer weiterhin einen Kanal umfaßt, der sich zwischen der Kammer und dem Temperatursensor erstreckt, wobei durch den Kanal zumindest eine elektrische Leitung zur Kopplung des Temperatursensors mit der Schaltung verläuft, wobei der Kanal und die Kammer ein abgeschlossenes Volumen bilden, welches gegenüber der Umgebung explosionsgeschützt ist,
wobei der Kanal ein Kanalrohr umfasst, welches zwischen dem Gehäuse und dem Druckmittlermodul angeordnet ist, und
wobei der Temperatursensor zum Erfassen einer Temperatur des Druckmittlermoduls in einem Sackloch in dem Druckmittlerkörper angeordnet ist.

In einer Ausgestaltung der Erfindung ist das Gehäuse mit dem Sensormodul verbunden bzw. unmittelbar an das Sensormodul angrenzend angeordnet oder mit dem Sensormodul als eine Baugruppe ausgebildet, wobei das Gehäuse auf der Seite des Sensormoduls angeordnet ist, die von dem Druckmittlermodul abgewandt ist.

Der Kanal wird erfindungsgemäß zumindest abschnittsweise durch ein Kanalrohr mit beispielsweise zylindrischem Querschnitt gebildet, welches zwischen dem Gehäuse und dem Druckmittlermodul angeordnet ist. Das Gehäuse weist bei diesem Ausführungsbeispiel in einer ersten Gehäusewand eine Öffnung auf, durch welche das Kanalrohr mit der Kammer kommuniziert. Die erste Gehäusewand kann beispielsweise die dem Druckmittler zugewandte Gehäusewand sein. In einer Ausgestaltung der Erfindung und insbesondere des zuvor beschriebenen Ausführungsbeispiels umfaßt das Sensormodul einen Grundkörper, welcher die Druckmeßzelle trägt, wobei die erste Gehäusewand den Grundkörper des Sensormoduls umfaßt, oder wobei der Grundkörper als erste Gehäusewand dient.

Die Verbindung zwischen dem Kanalrohr und dem Gehäuse muß erfindungsgemäß so erfolgen, daß das eingeschlossene Volumen der Kammer und des Kanals explosionsgeschützt ist. Hierzu kann beispielsweise eine gasdichte Verbindung zwischen Kanalrohr und Gehäuse vorgesehen sein, was u.a. durch Schweißen, Löten oder Einglasen erfolgen kann, oder das Kanalrohr ist mit einem ersten Endabschnitt in der Öffnung angeordnet, welche als Bohrung ausgebildet ist, wobei der Spalt zwischen der Außenwand des Kanalrohres und der Wand der Bohrung die Anforderungen an eine Flammendurchschlagsperre erfüllt. D.h. bei gegebenem Volumen des Kanals und der Kammer müssen die Länge des ersten Endabschnitts und die Spaltbreite so bemessen sein, daß die Anforderungen an eine Flammendurchschlagsperre erfüllt sind. Das Kanalrohr kann, beispielsweise durch einen Schweißpunkt, in der Öffnung gesichert sein.

Der Temperatursensor zum Erfassen einer Temperatur des Druckmittlermoduls ist erfindungsgemäß in einem Sackloch in dem Druckmittlerkörper angeordnet. Das Kanalrohr kann mit seinem zweiten Endabschnitt mit dem Sackloch fluchtend gasdicht mit dem Druckmittlerkörper verbunden sein, was beispielsweise durch Schweißen, Löten oder Einglasen erfolgen kann, oder das Kanalrohr ist mit seinem zweiten Endabschnitt in dem Sackloch angeordnet, wobei der Spalt zwischen der äußeren Kanalrohrwand und der Sacklochwand die Anforderungen an eine Flammendurchschlagsperre erfüllt. Das Kanalrohr kann, beispielsweise durch einen Schweißpunkt, in dem Sackloch gesichert sein.

In einer Ausführungsform fluchtet das Sackloch mit der Öffnung in der ersten Gehäusewand. Das Sackloch kann zweckmäßig den gleichen Durchmesser wie die Öffnung aufweisen, wobei das Kanalrohr in diesem Fall an seinem ersten und an seinem zweiten Endabschnitt vorzugsweise den gleichen Durchmesser aufweist.

Insofern als die Anforderungen an Flammendurchschlagsperren mit der Größe des eingeschlossenen Volumens steigen, ist es zweckmäßig, das zusätzliche Volumen des Kanals, welches bei der Ermittlung der Anforderungen an die Flammendurchschlagsperre zum Volumen der Kammer zu addieren ist, gering zu halten. Vorzugsweise ist das Volumen so gering zu halten, daß keine erhöhten Anforderungen gestellt werden.

Die erfindungsgemäßen Druckaufnehmer sind insbesondere Hochtemperaturdruckaufnehmer. Bei diesen Druckaufnehmern ist vorzugsweise ein Mindestabstand des Sensormoduls und des Gehäuses mit der elektronischen Schaltung von dem Druckmittlermodul einzuhalten, um das Sensormodul und das Gehäuse mit der elektronischen Schaltung thermisch von dem Druckmittlermodul zu trennen. Damit ist für den Kanal aber eine Mindestlänge vorgegeben, denn der Kanal muß den Abstand zwischen dem Druckmittlermodul und der Kammer in dem Gehäuse überbrücken. Zur Minimierung des Kanalvolumens bleibt deshalb dessen innere Querschnittsfläche bzw. dessen Innendurchmesser als wählbarer Parameter.

Bei einem Ausführungsbeispiel beträgt die innere Querschnittsfläche des Kanals in dem durch das Kanalrohr gebildeten Abschnitt nicht mehr als 8%, bevorzugt nicht mehr als 4% und weiter bevorzugt nicht mehr als 2% der Querschnittsfläche der Kammer. Unter Querschnittsfläche der Kammer ist in diesem Zusammenhang die größte Querschnittsfläche der Kammer in dem Gehäuse zu verstehen, wobei bei einem Gehäuse mit im wesentlichen axialsymmetrischer Geometrie, die maximale Querschnittsfläche senkrecht zur Symmetrieachse zu ermitteln ist.

Das Material des Kanalrohres weist zweckmäßig einen ähnlichen oder den gleichen Wärmeausdehnungskoeffizienten auf, wie das Material des Druckmittlerkörpers und wie das Material des Gehäuses. Beispielsweise können das Kanalrohr, das Gehäuse und der Druckmittlerkörper das gleiche Material aufweisen. Geeignet sind unter anderem metallische Legierungen, insbesondere Stähle wie VA-Stahl und Monel.

Das Kanalrohr kann ggf. eine stützende Funktion wahrnehmen, wenn es hinreichend stark dimensioniert ist, um die Druckleitung mechanisch zu entlasten. In diesem Fall hält das Kanalrohr die Position des Gehäuses bezüglich des Druckmittlermoduls im wesentlichen fest. Dies kann insofern von Nutzen sein, als die Druckleitung oft ein Kapillarrohr aufweist, welches mechanisch wenig belastbar ist. Die mechanische Entlastungsfunktion ist insbesondere vor der Endmontage eines Ausführungsbeispiels des erfindungsgemäßen Druckaufnehmers von Interesse, denn nach der Endmontage weist dieser Druckaufnehmer vorzugsweise ein Distanzrohr auf, welches das Gehäuse starr mit dem Druckmittlermodul verbindet und somit sowohl das Kanalrohr als auch die Druckleitung mechanisch entlastet. Das Distanzrohr weist vorzugsweise einen solchen Durchmesser auf, daß es das Kanalrohr und die Druckleitung umschließt.

Auf Einzelheiten der Temperaturmessung kommt es im vorliegenden Zusammenhang nicht an. Als Temperaturfühler kann jeder gängige Temperaturfühler, beispielsweise in Pt-100 Thermoelement, verwendet werden. Der Temperaturfühler kann ein elektrisch isolierendes Gehäuse aufweisen, beispielsweise ein Keramikgehäuse, welches in dem zweiten Endabschnitt des Kanals angeordnet ist, und einen hinreichenden thermischen Kontakt zwischen dem Temperaturfühler und dem Druckmittierkörper gewährleistet. Der Temperaturfühler erfaßt erfindungsgemäß eine Temperatur des Druckmittlerkörpers. Bevorzugt läßt die erfaßte Temperatur Aussagen über eine Temperatur in der Druckkammer zwischen der Trennmembran und dem Druckmittlerkörper zu. Hierzu sollte das Sackloch, welches von der medienabgewandten Seite des Druckmittlerkörpers in den Druckmittlerkörper hineinragt, eine solche Tiefe aufweisen, daß die Temperatur am Boden des Sacklochs hinreichend stark von der Temperatur in der Druckkammer abhängt.

Weitere Vorteile und Gesichtspunkte der Erfindung ergeben sich aus den abhängigen Patentansprüchen der und Beschreibung eines Ausführungsbeispiels anhand der beigefügten Zeichnung. Es zeigt:

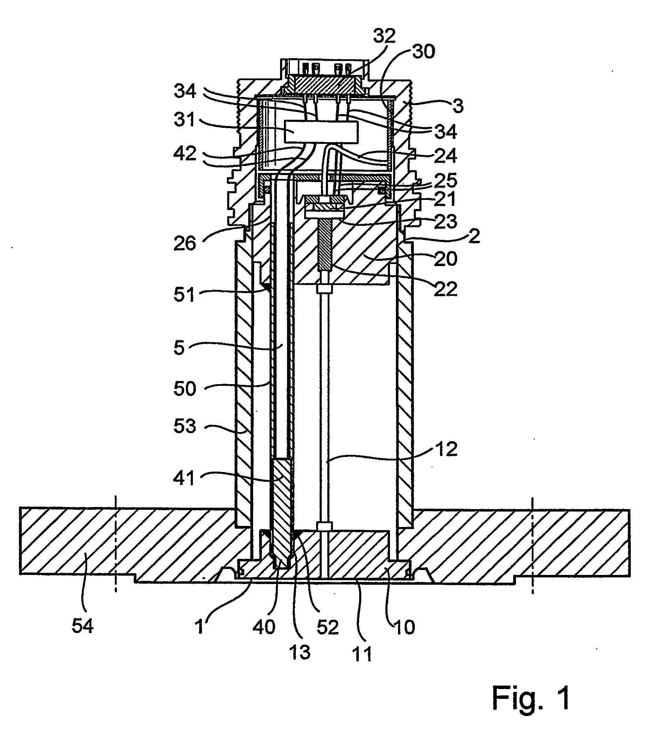

- Fig.1:: einen Längsschnitt durch einen erfindungsgemäßen Druckaufnehmer.

Der in Fig. 1 gezeigte Druckaufnehmer umfaßt ein Druckmittlermodul 1, ein Sensormodul 2 mit einem Grundkörper 20 und einer Druckmeßzelle 21 sowie ein Gehäuse 3 mit einer Kammer 30. Das Gehäuse 3 schließt unmittelbar an das Sensormodul 2 an, wobei eine Wand des Gehäuses 3 durch den Grundkörper 20 gebildet wird.

Das Druckmittlermodul 1 ist beabstandet zu dem Sensormodul 2 und dem Gehäuse 3 angeordnet. Das Druckmittlermodul 1 weist einen Druckmittlerkörper 10 auf, an dessen prozeßseitiger Stirnfläche eine Trennmembran 11 angeordnet ist, welche mit einem Prozeßdruck beaufschlagbar ist. Die Trennmembran verschließt eine mit einer Übertragungsflüssigkeit gefüllte Druckkammer, welche über eine Kapillarleitung 12, die sich zwischen dem Druckmittlermodul und dem Sensormodul erstreckt, mit der Druckmeßzelle 21 kommuniziert. Hierzu mündet das Kapillarrohr 12 in eine Druckkanalbohrung 22, welche sich in dem Grundkörper 20 bis in eine Meßzellenkammer 23 im Innern des Grundkörpers erstreckt. Die Druckmeßzelle 21 ist in der Meßzellenkammer 23 angeordnet. Derzeit sind piezoresistive oder kapazitive Druckmeßzellen bevorzugt, grundsätzlich sind aber auch Meßzellen mit anderen Meßprinzipien geeignet. Das Ausführungsbeispiel zeigt einen Relativdruckaufnehmer, wobei der Referenzdruck über eine Referenzluftleitung 24 zur Druckmeßzelle geleitet wird.

Die Meßzelle ist über erste elektrische Leitungen 25 an eine Schaltung 31 in einer Kammer 30 in dem Gehäuse 3 angeschlossen, wobei die Schaltung 31 das Primärsignal der Meßzelle verarbeitet und über zweite elektrische Leitungen 34, die an eine Durchführung 32 angeschlossen sind, kommuniziert und mit Energie versorgt wird. Bei der Verarbeitung des Primärsignals der Druckmeßzelle 31 geht die Druckmittlertemperatur als Parameter ein. Die Temperatur wird mittels eines Temperaturfühlers 40 erfaßt, der über Leitungen 42 mit der elektrischen Schaltung 31 verbunden ist. Der Temperaturfühler 40 ist beispielsweise ein Pt-100 Temperaturfühler der in einen im wesentlichen zylindrischen keramischen Meßkopf 41 angeordnet ist. Der Meßkopf 41 erstreckt sich in ein Sackloch 13 in dem Druckmittlerkörper 10. Die Integration des Temperaturfühlers 40 bzw. des Meßkopfs 41 in das explosionsgeschützte Volumen ist folgendermaßen realisiert.

Durch den Grundkörper 20 erstreckt sich eine Bohrung 26 , in welche ein erster Endabschnitt eines Kanalrohrs 50 über eine erste Einstecklänge I1 eingesteckt ist. Der äußere Durchmesser des Kanalrohrs 50 ist solchermaßen auf den Durchmesser der Bohrung 26 und die erste Einstecklänge I1 abgestimmt, daß der verbleibende Spalt zwischen der äußeren Mantelfläche des Rohrs und der Innenwand der Bohrung den Anforderungen an eine Flammendurchschlagsperre genügt. Das Kanalrohr 50 ist beispielsweise mit einem Schweißpunkt 51 an dem Grundkörper 20 fixiert. Der zweite Endabschnitt des Kanalrohrs 50 ist über eine zweite Einstecklänge I2 in das Sackloch 13 gesteckt, wobei der äußere Durchmesser des Kanalrohrs 50 so auf die zweite Einstecklänge I2 und den Durchmesser des Sacklochs 13 abgestimmt ist, daß der verbleibende Spalt zwischen der Mantelfläche des Kanalrohrs 50 und der Wand des Sacklochs 13 den Anforderungen an eine Flammendurchschlagsperre genügt. Das Kanalrohr 50 ist mittels eines Schweißpunkts 52 an dem Druckmittlerkörper fixiert.

Der Meßkopf 41 ist in dem Lumen 5 des Kanalrohrs 50 angeordnet und die Leitungen 42 werden durch das Lumen 5 in die Kammer 30 geführt, wo sie an die Schaltung 31 angeschlossen sind. Die elektrische Isolation der Leitungen 42 erfolgt bei der beschriebenen Ausführungsform durch eine Teflonbeschichtung. Anstelle eines direkten Anschluß an die Schaltung 31 können die Leitungen 42 in einer alternativen Ausgestaltung an Durchführungskontakte 32 angeschlossen sein. In diesem Fall würde die Temperaturkompensation nicht in durch die Schaltung 31 erfolgen, sondern durch eine nachgeordnete Einheit.

Während das Kanalrohr 50 hinreichend stabil ausgelegt sein kann, um das Sensormodul 2 mechanisch zu unterstützen, so ist dies nicht die derzeit bevorzugte Ausgestaltung der Erfindung. Stattdessen ist ein Distanzrohr 53 vorgesehen, an dessen ersten Ende das Druckmittlermodul 1 bzw. ein Flansch 54, der Druckmittlermodul 1 trägt, befestigt ist. Am zweiten Ende des Distanzrohrs 53 ist das Sensormodul 2 angeordnet.

## Patentansprüche

1. Druckaufnehmer zum Erfassen des Drucks eines Mediums, umfassend:
ein Druckmittlermodul (1) mit einem Druckmittlerkörper (10) und einer Trennmembran (11), die unter Bildung einer Druckkammer zwischen dem Druckmittlerkörper (10) und der Trennmembran an dem Druckmittlerkörper befestigt ist;
einen Temperatursensor (40) zum Erfassen einer Temperatur des Druckmittlermoduls (1);
ein Sensormodul (2) mit einer Druckmesszelle (21);
eine Druckleitung (12), die sich zwischen der Druckkammer und der Messzelle (21) erstreckt, um die Messzelle (21) mittels einer Übertragungsflüssigkeit mit dem in der Druckkammer vorherrschenden Druck zu beaufschlagen;
ein Gehäuse (30), welches von dem Druckmittlermodul (1) beabstandet ist und eine Kammer (30) aufweist, in der eine elektronische Schaltung (31) angeordnet ist, welche einen ersten Eingang für Signale der Druckmesszelle (21) und einen zweiten Eingang für Signale des Temperatursensors (40) aufweist; **dadurch gekennzeichnet, daß**
der Druckaufnehmer weiterhin einen Kanal (5) umfasst, der sich zwischen der Kammer (30) und dem Temperatursensor (40) erstreckt, wobei durch den Kanal (5) zumindest eine elektrische Leitung zur Kopplung des Temperatursensors mit der Schaltung (31) verläuft, wobei der Kanal (5) und die Kammer (30) ein abgeschlossenes Volumen bilden, welches gegenüber der Umgebung explosionsgeschützt ist,
wobei der Kanal (5) ein Kanalrohr (50) umfasst, welches zwischen dem Gehäuse (3) und dem Druckmittlermodul (1) angeordnet ist, und
wobei der Temperatursensor zum Erfassen einer Temperatur des Druckmittlermoduls in einem Sackloch in dem Druckmittlerkörper angeordnet ist.

2. Drucksensor nach Anspruch 1, wobei das Gehäuse unmittelbar an das Sensormodul angrenzend angeordnet ist.

3. Drucksensor nach Anspruch 1 oder 2, wobei das Sensormodul einen Grundkörper (20), welcher die Druckmesszelle (21) trägt, und das Gehäuse (3) in einer ersten Gehäusewand eine Öffnung (26) aufweist, durch welche das Kanalrohr (50) mit der Kammer kommuniziert, wobei der Grundkörper (20) des Sensormoduls (2) die erste Gehäusewand bildet.

4. Drucksensor nach einem der Ansprüche 1 bis 3, wobei die Verbindung zwischen dem Kanalrohr und dem Gehäuse einen Spalt umfasst, der den Anforderungen an eine Flammendurchschlagsperre genügt.

5. Drucksensor nach einem der Ansprüche 1 bis 4, wobei das Kanalrohr mit einem Endabschnitt mit dem Sackloch gasdicht mit dem Druckmittlerkörper verbunden ist.

6. Drucksensor nach einem der Ansprüche 1 bis 4, wobei das Kanalrohr mit einem Endabschnitt in das Sackloch gesteckt ist, wobei ein Spalt der zwischen der äußeren Kanalrohrwand und dem Sackloch verbleibt die Anforderungen an eine Flammendurchschlagsperre erfüllt.

7. Drucksensor nach einem der vorhergehenden Ansprüche, wobei der Druckaufnehmer ein Absolutdruck- oder Relativdruckaufnehmer ist.

## Claims

1. Pressure sensor to measure the pressure of a medium, comprising:
a diaphragm seal module (1) with a diaphragm seal body (10) and a process isolating diaphragm (11) which is secured to the diaphragm seal body (10) by the formation of a pressure chamber between the diaphragm seal body (10) and the process isolating diaphragm;
a temperature sensor (40) for measuring a temperature of the diaphragm seal module (1);
a sensor module (2) with a pressure measuring cell (21);
a pressure pipe (12) which extends between the pressure chamber and the measuring cell (12) in order to expose the measuring cell (21) to the pressure present in the pressure chamber via a transfer liquid;
a housing (30) which is at a distance from the diaphragm seal module (1) and has a chamber (30) in which an electronic circuit (31) is arranged, said circuit having a first input for signals of the pressure measuring cell (21) and a second input for signals of the temperature sensor (40), **characterized in that**:
the pressure sensor further comprises a duct (5) which extends between the chamber (30) and the temperature sensor (40), wherein at least one electrical cable runs through the duct (5) to couple the temperature sensor with the circuit (31), wherein the duct (5) and the chamber (30) form an enclosed volume which is explosion protected in relation to the environment,
wherein the duct (5) comprises a duct tube (50) which is arranged between the housing (3) and the diaphragm seal module (1), and
wherein the temperature sensor for measuring a temperature of the diaphragm seal module is arranged in a blind hole in the diaphragm seal body.

2. Pressure sensor as claimed in Claim 1, wherein the housing is arranged directly adjacent to the sensor module.

3. Pressure sensor as claimed in Claim 1 or 2, wherein the sensor module has a meter body (20) which supports the pressure measuring cell (21) and the housing (3) has an opening (26) in a first housing wall through which the duct tube (50) communicates with the chamber, wherein the meter body (20) of the sensor module (2) forms the first housing wall.

4. Pressure sensor as claimed in one of the Claims 1-3, wherein the connection between the duct tube and the housing comprises a gap which meets the requirements for a flashback arrester.

5. Pressure sensor as claimed in one of the Claims 1-4, wherein an end section of the duct tube is flush with the blind hole and connected gas-tight to the diaphragm seal body.

6. Pressure sensor as claimed in one of the Claims 1-4, wherein an end section of the duct tube is inserted into the blind hole, wherein a gap which remains between the outer duct tube wall and the blind hole meets the requirements for a flashback arrester.

7. Pressure sensor as claimed in one of the previous claims, wherein the pressure sensor is an absolute pressure sensor or a relative pressure sensor.

## Revendications

1. Capteur de pression destiné à la mesure de la pression d'un produit, comprenant:
un module séparateur (1) avec un corps de séparateur (10) et une membrane de séparation (11), qui est fixée, en formant une chambre de pression, entre le corps de séparateur (10) et la membrane de séparation sur le corps de séparateur ;
un capteur de température (40) destiné à la mesure d'une température du module séparateur (1) ;
un module capteur (2) avec une cellule de mesure de pression (21) ;
une conduite de pression (12), qui s'étend entre la chambre de pression (1) et la cellule de mesure (21), afin d'alimenter la cellule de mesure (21) avec la pression régnant dans la chambre de pression au moyen d'un liquide de transmission ;
un boîtier (30), lequel se trouve à distance du module séparateur (1) et comporte une chambre (30), dans laquelle est disposée un circuit électronique (31), lequel comporte une première entrée pour les signaux de la cellule de mesure de pression (21) et une deuxième entrée pour les signaux du capteur de température (40) ; **caractérisé en ce**
**que** le capteur de pression comprend en outre un canal (5), qui s'étend entre la chambre (30) et le capteur de température (40), au moins un câble électrique destiné au couplage du capteur de température avec le circuit (31) traversant le canal (5), le canal (5) et la chambre (30) formant un volume fermé, qui est protégé contre les explosions par rapport à l'environnement, le canal (5) comprenant un tube de canal (50), lequel est disposé entre le boîtier (3) et le module séparateur (1), et
le capteur de température destiné à la mesure d'une température du module séparateur étant disposé dans un trou borgne à l'intérieur du corps de séparateur.

2. Capteur de pression selon la revendication 1, pour lequel le boîtier est disposé de manière immédiatement adjacente au module capteur.

3. Capteur de pression selon la revendication 1 ou 2, pour lequel le module capteur présente un corps de base (20), qui supporte la cellule de mesure de pression (21), et pour lequel le boîtier présente, dans la première paroi de boîtier, une ouverture (26) à travers laquelle le tube de canal (50) communique avec la chambre, le corps de base (20) du module capteur (2) formant la première paroi de boîtier.

4. Capteur de pression selon l'une des revendications 1 à 3, pour lequel la liaison entre le tube de canal et le boîtier comprend une fente, qui satisfait aux exigences d'une barrière de protection contre le retour de flamme.

5. Capteur de pression selon l'une des revendications 1 à 4, pour lequel une partie finale du tube de canal est reliée de façon étanche au gaz avec le trou borgne à l'intérieur du corps de séparateur.

6. Capteur de pression selon l'une des revendications 1 à 4, pour lequel le tube de canal est introduit avec une partie finale dans le trou borgne, une fente se formant entre la paroi extérieure du tube de canal et le trou borgne satisfaisant aux exigences d'une barrière de protection contre le retour de flamme.

7. Capteur de pression selon l'une des revendications précédentes, pour lequel le capteur de pression est un capteur de pression absolue ou relative.
